# DEMANDE DE BREVET EUROPEEN

(11) **EP 0 818 937 A1**
(43) Date de publication de la demande: **14.01.1998**
(21) Numéro de dépôt: 97401596.8
(22) Date de dépôt: 04.07.1997
(51) Int. Cl.: H04Q 7/32

(54) **Equipement de radiocommunication à mode de communication sécurisée, et unité d'extension faisant partie d'un tel équipement**

(30) Priorité: 09.07.1996 FR 9608514
(71) Demandeur: MATRA COMMUNICATION, 29100 Quimper (FR)
(72) Inventeur: Lambourg, Michel, 92370 Chaville (FR)
(74) Mandataire: Loisel, Bertrand

(57) **Abrégé**

L'équipement comprend un terminal radio (10) adapté aux communications avec un réseau public de téléphonie mobile supportant des canaux de phonie et des canaux de données. L'équipement comprend en outre une unité d'extension (60) raccordable à une interface de données du terminal (10) et permettant des communications sur les canaux de données du réseau. Cette unité d'extension comporte un microphone, un écouteur, un vocodeur et un module de chiffrement. Elle présente le même aspect extérieur qu'un terminal radio mobile classique. Dans un mode de communication sécurisée, le signal issu du microphone de l'unité d'extension est traité par le vocodeur puis par le module de chiffrement pour produire des données envoyées à l'interface de données du terminal, et les données reçues depuis l'interface de données du terminal (10) sont traitées par le module de chiffrement et par le vocodeur pour commander l'écouteur de l'unité d'extension (60).

## Description

La présente invention a pour objet un équipement de radiocommunication mobile offrant à son utilisateur la possibilité d'avoir des communications confidentielles avec son correspondant.

Par "communication confidentielle" on entend ici une communication dans laquelle les signaux de phonie échangés sont chiffrés selon une méthode et/ou des clés de chiffrement qui sont seulement connues des correspondants ou d'une organisation les regroupant.

La présente invention vise notamment à autoriser de telles communications confidentielles dans de larges zones géographiques.

L'essor actuel des réseaux publics de radiotéléphonie cellulaire offre une possibilité attrayante en raison des nombreuses stations de base existantes qui assurent une couverture territoriale très importante.

Certains des réseaux cellulaires permettent le chiffrement des communications de phonie. C'est le cas notamment du système européen GSM et de ses dérivés. Néanmoins, les chiffrements effectués n'assurent en général la confidentialité de la communication que sur l'interface air. Même dans le cas d'une communication GSM entre deux terminaux mobiles, les signaux de phonie sont déchiffrés et transcodés (entre 13 et 64 kbits/s) pour les liens entre différentes entités de l'infrastructure au sol. La sécurité des communications n'est donc pas complète. En outre, les fonctionnalités du chiffrement sont sous le contrôle de l'opérateur du réseau et non des utilisateurs, ce qui n'est pas satisfaisant pour assurer la confidentialité au sens ci-dessus.

Un but de la présente invention est de proposer un équipement de radiocommunication convenant pour des communications confidentielles par l'intermédiaire de l'infrastructure existante d'un réseau public de téléphonie mobile. On souhaite également que l'équipement soit d'une utilisation discrète et en outre d'un coût de revient modéré.

L'invention propose ainsi un équipement de radiocommunication comprenant un terminal radio adapté aux communications avec un réseau public de téléphonie mobile supportant des canaux de phonie et des canaux de données, le terminal radio comportant une interface de données pour le raccordement d'une unité d'entrée/sortie de données permettant des communications sur les canaux de données du réseau. Selon l'invention, l'équipement comporte en outre, en tant qu'unité d'entrée/sortie de données, une unité d'extension ayant un aspect extérieur semblable à celui d'un terminal de radiocommunication et comportant au moins un microphone, un écouteur, un vocodeur et un module de chiffrement. Dans un mode de communication sécurisée, le vocodeur forme à partir du signal issu du microphone un flux binaire que le module de chiffrement traite pour produire des données envoyées à l'interface de données pour transmission sur un canal de données, et des données présentées à l'interface de données après réception sur un canal de données sont déchiffrées par le module de chiffrement pour produire un flux binaire que le vocodeur décode pour commander l'écouteur. Un autre aspect de l'invention se rapporte plus particulièrement à l'unité d'extension de cet équipement.

L'invention exploite ainsi la présence de canaux de données dans certains réseaux de radiotéléphonie. Les communications confidentielles empruntent ces canaux de données de manière transparente. Les données ainsi échangées représentent des signaux de phonie, et sont chiffrées et déchiffrées à chacune des extrémités de la communication. Un tiers surveillant le trajet de la communication sans connaître la méthode de codage, la méthode de chiffrement et les clés de chiffrement employées n'a aucun accès aux signaux de phonie.

Les fonctionnalités nécessaires au mode de communication sécurisée sont regroupées dans une unité d'extension d'un terminal par radio existant. Ceci évite d'avoir à concevoir l'ensemble d'un terminal radio compatible avec le réseau public pour cette application spécifique. Il en résulte une importante limitation du coût de revient de l'équipement. L'avantage économique est encore renforcé par l'utilisation d'un terminal radio banal, bénéficiant de l'effet de masse qu'occasionne le développement des réseaux numériques cellulaires tels que le GSM.

Un autre avantage de l'équipement selon l'invention est sa discrétion. Le terminal radio employé peut être porté discrètement par l'utilisateur, par exemple dans un vêtement, et relié par exemple par un câble à l'unité d'extension tenue en main. Cette dernière unité ayant l'aspect extérieur d'un terminal de radiocommunication, un observateur aura l'impression qu'il s'agit d'une communication radio banale et non particulièrement confidentielle.

D'autres particularités et avantages de la présente invention apparaîtront dans la description ci-après d'un exemple de réalisation non limitatif, en référence aux dessins annexés, dans lesquels :
- la figure 1 montre un équipement de radiocommunication selon l'invention en cours d'utilisation ; et
- les figures 2 et 3 sont respectivement des schémas synoptiques d'une unité d'extension et d'un terminal radio faisant partie d'un équipement selon l'invention.

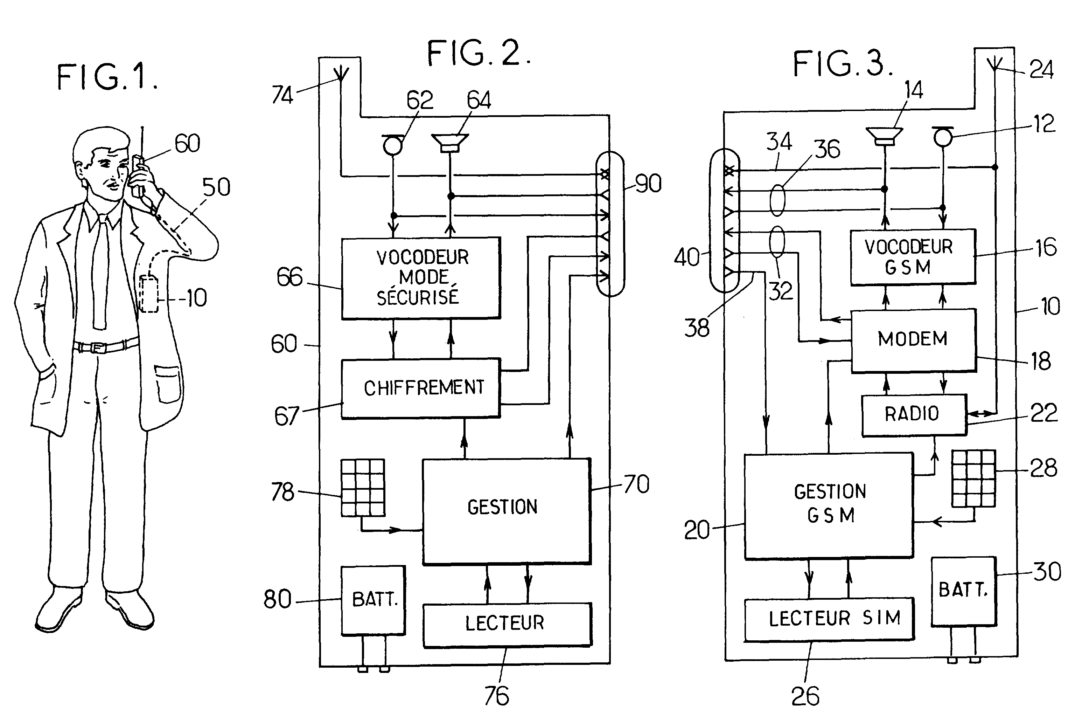

La figure 1 montre une personne utilisant un équipement de radiocommunication selon l'invention, à savoir un terminal radio 10, une unité d'extension 60 et un câble de connexion 50. L'ensemble est porté de façon discrète par l'utilisateur, c'est-à-dire que le terminal 10 peut être placé dans la poche d'un vêtement, et l'unité d'extension 60 tenue à la main, le câble 50 passant par exemple dans une manche du vêtement pour être invisible.

Le terminal radio 10, dont la figure 3 montre un schéma synoptique, est un terminal ordinaire compatible avec un réseau public de radiotéléphonie. Dans la suite de l'exposé, on considérera le cas d'un réseau GSM, sans que ceci soit limitatif.

Les spécifications des terminaux GSM sont bien connues de l'homme du métier. Le terminal 10 comprend ainsi :
- un microphone 12 et un écouteur 14,
- un vocodeur 16 (de type RPE-LTP) conforme aux normes GSM,
- un modulateur/démodulateur 18 assurant les fonctions de codage/décodage canal et de mise en forme des trames AMRT (accès multiple par répartition dans le temps) sous le contrôle d'un module de gestion 20,
- un étage radio 22 réalisant l'interface avec l'antenne 24 du terminal,
- un lecteur 26 pour un support de données amovible, ou carte SIM (Subscriber Identity Module), où sont stockées les données d'abonnement de l'utilisateur pour permettre au module de gestion 20 d'exécuter les tâches d'authentification et de gestion d'appel prévues par les normes GSM,
- un clavier 28 pour la composition des numéros des correspondants ou l'appel d'autres fonctions,
- une batterie rechargeable 30 pour alimenter électriquement les différents modules du terminal.

Le terminal 10 est en outre pourvu d'un certain nombre d'interfaces extérieures regroupées dans un connecteur unique 40 sur lequel se branche le câble de connexion 50. Ces interfaces comprennent :
- une interface de données 32 pour le raccordement d'une unité extérieure d'entrée/sortie de données. L'interface 32 est reliée au modulateur/démodulateur 18 pour le fournir des données à émettre selon un canal de données du réseau radio, et pour transmettre vers l'unité d'entrée/ sortie de données, des données démodulées après réception sur un canal de données du réseau radio. Dans la plupart des applications connues, l'unité d'entrée/sortie de données est généralement un micro-ordinateur ou un télécopieur ;
- une interface d'antenne 34 pour le raccordement d'une antenne déportée. Une telle interface est souvent prévue pour les utilisations du terminal en voiture, pour permettre à l'étage radio 22 d'utiliser l'antenne du véhicule ;
- une interface audio 36 permettant au vocodeur 16 de recevoir ses signaux audio d'un microphone déporté au lieu du microphone 12, et d'envoyer les signaux audio vers un haut-parleur ou un écouteur déporté plutôt que vers l'écouteur 14. Une telle interface 36 est fréquemment prévue pour le raccordement d'un dispositif mains libres au terminal ;
- une interface de commande 38 pour le raccordement d'un clavier externe au lieu du clavier 28 pour la numérotation ou l'introduction d'autres commandes (le plus souvent, le clavier externe est celui du micro-ordinateur ou du télécopieur raccordé à l'interface de données 32).

Un exemple de terminal GSM 10 regroupant les interfaces ci-dessus dans un même connecteur 40 est le terminal MATRACOM 2050 commercialisé par la demanderesse.

L'invention propose d'associer à un tel terminal radio une unité d'extension 60 ayant l'aspect extérieur d'un terminal de radiotéléphonie et pourvue d'un connecteur 90 complémentaire du connecteur 40 pour le branchement du câble de connexion 50.

L'unité d'extension 60 comporte un microphone 62 et un écouteur 64, un vocodeur 66 spécifique d'un mode de communication sécurisée, et un module de chiffrement 67. Le module de chiffrement 67 est relié à l'interface de données 32 du terminal 10 par l'intermédiaire du connecteur 90 et du câble de connexion 50.

Dans le mode de communication sécurisée, l'unité d'extension 60, plus précisément le module de chiffrement 67, constitue l'unité d'entrée/sortie de données associée à l'interface 32 du terminal 10. Les signaux de phonie reçus du microphone 62 sont codés par le vocodeur 66 puis chiffrés par le module 67 qui produit ainsi des données envoyées à l'interface de données 32. Dans l'autre sens, les données reçues depuis l'interface 32 sont déchiffrées par le module 67, puis décodées par le vocodeur 66, le signal audio ainsi reconstitué étant appliqué à l'écouteur 64.

Les communications en phonie chiffrée empruntent ainsi des canaux de données du réseau cellulaire. Dans le cas des réseaux GSM, il est prévu (voir Recommandation GSM 02.02) des canaux de données à 9600 bits/s, soit un débit largement suffisant pour un grand nombre de vocodeurs connus. L'interlocuteur de l'utilisateur peut être pourvu d'un équipement du même type, ou encore d'un équipement fixe d'émission/réception de données apte à déchiffrer les messages transmis.

Le fonctionnement de l'unité d'extension 60 est supervisé par un module de gestion 70 qui coopère avec un lecteur 76 de support de données amovible. Ce support est par exemple une carte à puce confiée à l'utilisateur et pouvant contenir des données du même genre que les modules SIM du GSM, et pouvant présenter les mêmes caractéristiques d'interface. Mais ces données concernent l'utilisateur en relation avec son organisation ou ses correspondants et non en relation avec l'opérateur du réseau public (le module SIM du GSM doit pour cela être présenté au lecteur 28 du terminal GSM 10). Le module de gestion 70 assure notamment les procédures d'authentification et/ou d'identification entre l'utilisateur et son correspondant suivant un protocole préétabli et en échangeant des données correspondantes avec le support amovible présenté au lecteur 76. Le module de gestion 70 définit en outre, selon ces protocoles, la ou les clés de chiffrement dont a besoin le module 67.

L'unité d'extension 60 comporte avantageusement une antenne 74 qui se raccorde à l'interface d'antenne 34 par l'intermédiaire du connecteur 90 et du câble 50 pour constituer une antenne déportée du terminal 10.

Le microphone 62 et l'écouteur 64 de l'unité d'extension 60 peuvent également être reliés à l'interface audio 36 par l'intermédiaire du connecteur 90 et du câble de connexion 50 pour former un microphone déporté et un écouteur déporté vis-à-vis du vocodeur 16 du terminal radio 10. L'utilisateur peut alors se servir de l'unité d'extension 60 aussi bien pour des communications en mode sécurisé (à travers le vocodeur 66, le module de chiffrement 67 et un canal de données) que lorsqu'il sélectionne un mode de communication non sécurisé (par l'intermédiaire du vocodeur 16 et d'un canal de phonie du réseau).

Le module de gestion 70 est relié à une autre interface d'utilisateur constituée par un clavier 78 permettant à l'utilisateur de composer les numéros de ses correspondants (le clavier 78 étant raccordé en tant que clavier externe à l'interface de commande 38 par l'intermédiaire du module de gestion 70), de sélectionner le mode de communication (sécurisée ou non sécurisée), et éventuellement de commander d'autres fonctions. L'unité d'extension 60 peut également comporter un écran d'affichage non représenté.

Enfin, l'unité d'extension 60 comporte une batterie rechargeable 80 pour l'alimentation électrique de ses différents composants.

## Revendications

1. Equipement de radiocommunication, comprenant un terminal radio (10) adapté aux communications avec un réseau public de téléphonie mobile supportant des canaux de phonie et des canaux de données, le terminal radio comportant une interface de données (32) pour le raccordement d'une unité d'entrée/sortie de données permettant des communications sur les canaux de données du réseau, caractérisé en ce qu'il comporte en outre, en tant qu'unité d'entrée/sortie de données, une unité d'extension (60) ayant un aspect extérieur semblable à celui d'un terminal de radiocommunication et comportant au moins un microphone (62), un écouteur (64), un vocodeur (66) et un module de chiffrement (67), et en ce que, dans un mode de communication sécurisée, le vocodeur forme à partir du signal issu du microphone un flux binaire que le module de chiffrement traite pour produire des données envoyées à l'interface de données pour transmission sur un canal de données, et des données présentées à l'interface de données après réception sur un canal de données sont déchiffrées par le module de chiffrement pour produire un flux binaire que le vocodeur décode pour commander l'écouteur.

2. Equipement selon la revendication 1, caractérisé en ce que le terminal radio (10) comporte une interface d'antenne (34) pour le raccordement d'une antenne déportée pour l'émission et la réception d'ondes radio par le terminal, et en ce que l'unité d'extension (60) comporte une antenne (74) raccordée à l'interface d'antenne en tant qu'antenne déportée.

3. Equipement selon la revendication 1 ou 2, caractérisé en ce que le terminal radio (10) comporte un vocodeur (16) adapté à des canaux de phonie du réseau public de téléphonie mobile, et une interface audio (36) pour le raccordement au vocodeur du terminal radio d'un microphone déporté et d'un écouteur déporté, et en ce que le microphone (62) et l'écouteur (64) de l'unité d'extension (60) sont reliés à l'interface audio de façon à servir de microphone déporté et d'écouteur déporté dans un mode de communication non sécurisée.

4. Equipement selon l'une quelconque des revendications 1 à 3, caractérisé en ce que le terminal radio (10) comporte une interface de commande (38) pour le raccordement d'un clavier externe pour la numérotation, et en ce que l'unité d'extension (60) comporte un clavier (78) raccordé à l'interface de commande en tant que clavier externe.

5. Equipement selon l'une quelconque des revendications 1 à 4, caractérisé en ce que l'unité d'extension comporte un module de gestion (70) qui pilote au moins le mode de communication sécurisée, et un lecteur (76) de support de données amovible pour l'échange de données d'authentification et/ou d'identification entre le module de gestion et un support de données présenté audit lecteur.

6. Unité d'extension pour un terminal radio (10) adapté aux communications avec un réseau public de téléphonie mobile supportant des canaux de phonie et des canaux de données, le terminal radio comportant une interface de données (32) pour le raccordement d'une unité d'entrée/sortie de données permettant des communications sur les canaux de données du réseau, l'unité d'extension (60) étant caractérisée en ce qu'elle est raccordable au terminal radio en tant qu'unité d'entrée/sortie de données, en ce qu'elle a un aspect extérieur semblable à celui d'un terminal de radiocommunication, en ce qu'elle comporte au moins un microphone (62), un écouteur (64), un vocodeur (66) et un module de chiffrement (67), et en ce que, dans un mode de communication sécurisée, le vocodeur forme à partir du signal issu du microphone un flux binaire que le module de chiffrement traite pour produire des données envoyées à l'interface de données pour transmission sur un canal de données, et des données présentées à l'interface de données après réception sur un canal de données sont déchiffrées par le module de chiffrement pour produire un flux binaire que le vocodeur décode pour commander l'écouteur.

7. Unité d'extension selon la revendication 6, pour un terminal radio (10) comportant une interface d'antenne (34) pour le raccordement d'une antenne déportée pour l'émission et la réception d'ondes radio par le terminal, caractérisée en ce qu'elle comporte une antenne (74) raccordable à l'interface d'antenne en tant qu'antenne déportée.

8. Unité d'extension selon la revendication 6 ou 7, pour un terminal radio (10) comportant un vocodeur (16) adapté à des canaux de phonie du réseau public de téléphonie mobile et une interface audio (36) pour le raccordement au vocodeur du terminal radio d'un microphone déporté et d'un écouteur déporté, caractérisée en ce que le microphone (62) et l'écouteur (64) de l'unité d'extension (60) sont raccordables à l'interface audio de façon à servir de microphone déporté et d'écouteur déporté dans un mode de communication non sécurisée.

9. Unité d'extension selon l'une quelconque des revendications 6 à 8, pour un terminal radio (10) comportant une interface de commande (38) pour le raccordement d'un clavier externe pour la numérotation, caractérisée en ce qu'elle comporte un clavier (78) raccordable à l'interface de commande en tant que clavier externe.

10. Unité d'extension selon l'une quelconque des revendications 6 à 9, caractérisée en ce qu'elle comporte un module de gestion (70) qui pilote au moins le mode de communication sécurisée, et un lecteur (76) de support de données amovible pour l'échange de données d'authentification et/ou d'identification entre le module de gestion et un support de données présenté audit lecteur.
